# NEUE EUROPÄISCHE PATENTSCHRIFT

(11) **EP 0 899 705 B2**
(45) Veröffentlichungstag und Bekanntmachung des Hinweises auf die Entscheidung über den Einspruch: **22.03.2006**
(45) Hinweis auf die Patenterteilung: 04.09.2002
(21) Anmeldenummer: 98119673.6
(22) Anmeldetag: 16.02.1995
(51) Int. Cl.: G09F 3/02, G08B 13/24

(54) **Verfahren zur Herstellung eines Sicherheitsetikettenstreifens**
Method of producing a sheet of security tags
Procédé de fabrication d'une feuille d'étiquettes de sécurité

(30) Priorität: 10.05.1994 DE 4416444; 11.10.1994 DE 4436284
(43) Veröffentlichungstag der Anmeldung: 03.03.1999
(62) Teilanmeldung aus: 95102132.8
(73) Patentinhaber: Meto International GmbH, 69434 Hirschhorn/Neckar (DE)
(72) Erfinder: Chamberlain, John, Boca Raton, FL 33433 (US); Klassen, Gordon, Duarte, California 91010 (US)
(74) Vertreter: Menges, Rolf

(56) Entgegenhaltungen:
- EP-A- 0 232 054
- EP-A- 0 446 910
- EP-A- 0 578 992
- WO-A-91/04851
- DE-A- 3 244 430
- DE-A- 4 024 723
- GB-A- 2 199 010
- US-A- 2 304 787
- US-A- 3 415 705
- US-A- 3 457 137
- US-A- 4 475 969

## Beschreibung

Die Erfindung bezieht sich auf ein Verfahren der im Oberbegriff des Patentanspruchs 1 angegebenen Art.

Im Stande der Technik werden hochwertige Artikel in Verkaufseinrichtungen in der Weise gegen Diebstähle geschützt, daß im Bereich des Ausganges des Verkaufsraumes ein Detektor aufgestellt wird, der mit einem in Etiketten oder Anhängern untergebrachten, an den Verkaufsgegenständen befestigten Sicherungselement in Wechselwirkung tritt. Letzteres interagiert beim Unterschreiten eines Schwellenabstandes elektromagnetisch, d. h. durch hochfrequente Wellen, oder magnetisch mit dem Detektor. Falls somit ein - nicht zuvor durch das Verkaufspersonal deaktiviertes - Sicherungselement in der Absicht, es zu stehlen, am Detektor vorbeigeführt wird, spricht der Detektor an und gibt ein akustisches und/oder optisches und/oder elektronisches Warnsignal ab.

Die Etiketten werden herkömmlicherweise auf Trägerbändern geliefert, auf denen sie mittels einer Klebeverbindung befestigt sind. Das Verkaufspersonal entferntsie bei der Kennzeichnung der Artikel manuell oder mittels eines geeigneten Handetikettiergerätes vom Trägerband und fixiert sie mittels der auf ihrer Rückseite verbleibenden, adhäsiven Beschichtung an dem jeweiligen Gegenstand. Alternativ können die Gegenstände bereits beim Hersteller oder in Verteilerzentren mit Sicherheitsetiketten versehen werden. Um alle gekennzeichneten Artikel gegen Diebstahl zu sichern, sind sämtliche auf einem Trägerbandstreifen oder einer -rolle gelieferten Etiketten mit - stets an derselben Stelle angebrachten - Sicherungselementen ausgestattet.

Als nachteilig ist der nicht unerhebliche Preis der Sicherheitsetiketten anzusehen, der primär durch die darin integrierten elektromagnetischen Sicherungselemente bedingt ist. Durch eingehende Untersuchungen wurde belegt, daß die höchste finanzielle Effizienz erreicht wird, falls nur ein gewisser Anteil der von Diebstahl bedrohten Artikel gesichert wird.

Der Kerngedanke besteht darin, nicht die Gesamtheit (d. h. jedes) der auf einem Streifen gelieferten Etiketten bzw. Anhänger, sondern nur einen festgelegten Anteil ihrer Anzahl (z. B. etwa 80 %) mit Sicherungselementen auszustatten, während die übrigen Etiketten nicht elektromagnetisch aktiv oder aktivierbar sind. Da sämtliche Etiketten bzw. Anhänger aus demselben Material bestehen, gleichartig bedruckt sind und von demselben Streifen stammen, ist nur schwer erkennbar, welches von ihnen elektromagnetisch gesichert und welches ungesichert ist. Als zweckmäßig erweist sich dabei, das Etikett so zu gestalten, daß das Sicherungselement getarnt, d. h. optisch nicht vom übrigen Etikett unterscheidbar ist.

Bezüglich der Art der Sicherungselemente bestehen verschiedene Möglichkeiten:

Zunächst kann ein schmaler Streifen aus weichmagnetischem Material zum Einsatz kommen. Er wird in der Ausgangskontrolle mit einem magnetischen Wechselfeld beaufschlagt und entsprechend der jeweiligen Frequenz ummagnetisiert. Da der Streifen nunmehr selbst ein Wechselfeld abstrahlt, das von einer Empfängerantenne detektiert wird, erfolgt eine Aktivierung des Diebstahlalarmes. Zur Deaktivierung kann der Streifen zusätzlich mit im Abstand voneinander angeordneten, hartmagnetischen Metallstücken überdeckt werden.

Weiterhin ist eine weichmagnetische, auf einer Trägerfolie aufgebrachte, d. h. aufgedampfte oder aufgesputterte Dünnfilmschicht als Sicherungselement vorgeschlagen. Zum Deaktivieren kann darunter und/oder darüber eine hartmagnetische Metallfolie, beispielsweise aus Nickel vorgesehen werden.

Aus dem Dokument EP-A-0 578 992 ist ein Verfahren bekannt zur Herstellung von qualitativ hochwertigen Sicherheitsetiketten. Es wird zunächst auf ein nichtmetallisches Band ein hartmagnetischer Metallstreifen und danach auf den Metallstreifen eine Trägerfolie aufgeklebt die eine derartige Dicke und Elastizität aufweist, daß ein Stanzmesser am Ort dessen Einwirkens auf den Metallstreifen eine elastische Deformation des Metallstreifens \ und der Trägerfolie verursacht, die ausreicht, um den Metallstreifen zu trennen.

Aus dem nichtmetallischen Band und dem Metallstreifen werden Teile herausstanzt, die von der Trägerfolie abgelöst werden. Auf die verbleibenden Teile des hartmagnetischen Metallstreifens wird ein weichmagnelisches Metallband aufgebracht. Im Anschluß daran wird auf die eine Seite des auf obige Weise hergestellten Schichtmaterials Etikettenpapier und auf die andere Seite ein Trägerband aufgeklebt, so daß sich ein Zwischenprodukt ergibt, aus dem Etiketten gestanzt werden können. Schließlich sind alternativ zu den magnetischen Sicherungseinrichtungen elektromagnetisch arbeitende Resonanzschwingkreise einsetzbar, die als Dünnschichtschaltungen realisiert werden können. Am Ausgang werden die aus einem Kondensator und einer Induktivität bestehenden Schwingkreise mit einem elektromagnetischen Hochfrequenzfeld beaufschlagt, so daß sie im Resonanzfall ebenfalls Wellen abstrahlen, die zur Alarmierung mittels geeigneter Antennen erfaßt werden.

Aufgabe der Erfindung ist es, ein wirtschaftliches Verfahren zur Herstellung eines Sicherheitsetikettenstreifens anzugeben.

Diese Aufgabe wird erfindungsgemäß durch ein Verfahren der eingangs genannten Art gelöst, das die im kennzeichnenden Teil des Anspruchs 1 angegebenen Schritte umfaßt. Vorteilhafte Ausgestaltungen der Erfindung bilden die Gegenstände der abhängigen Ansprüche.

Die Grundidee besteht bei dem erfindungsgemäßen Verfahren darin, die Sicherungselemente von einem Sicherungselementeträgerband abzulösen und derart zu spenden, daß sie in eine gewünschte Position auf einem Sicherheitsetikett oder -anhänger gelangen. Die Sicherungselemente, die eine beliebige Form und Größe aufweisen können, werden somit zunächst durch eine Klebeverbindung auf einem Sicherungselementeträgerband befestigt und bei der Herstellung der Sicherheitsetiketten sukzessive an einer Spendkante wiederum davon abgelöst. Das dabei freiwerdende Sicherungselement wird nunmehr mit den übrigen Teilen des Etiketts oder Anhängers zusammengeführt und -laminiert. Entscheidend ist dabei, daß die Position des Sicherungselementes auf dem (daran vorbeigeführten) Etikett bzw. Anhänger durch den Zeitpunkt des Spendvorganges festgelegt wird und somit beliebig steuerbar wird. Insbesondere besteht die Möglichkeit, große Etiketten oder Anhänger mit wesentlich kleineren Sicherungselementen zu versehen.

Die Vorteile bestehen vornehmlich darin, daß die Produktionskosten der Sicherheitsetiketten oder Sicherungsanhänger durch eine Verminderung der Flächen der Sicherungselemente reduzierbar sind, da beliebig kleine Sicherungselemente Verwendung finden können. Außerdem wird es möglich, ein standardisiertes Sicherungselement auf Etiketten und Anhänger beliebiger Art und Größe aufzubringen, was eine entscheidende Reduzierung der Lagerkosten zur Folge hat, da nur noch eine Art von Sicherungselementen vorrätig zu halten ist. Offensichtlich ist das vorgeschlagene Verfahren auch dazu geeignet, sämtliche Etiketten bzw. Anhänger eines Streifens mit Sicherungselementen auszustatten.

Zur sicheren Verbindung mit den Sicherheitsetiketten - bzw. mit den mit ihnen beklebten Gegenständen - oder den Anhängern ist vorgeschlagen, die Sicherungselemente derart auf das Sicherungselementeträgerband aufzukleben, daß ihre dem Trägerband zugewandte Seite auch nach dem Spendvorgang, d. h. nach dem Ablösen vom Sicherungselementeträgerband, adhäsiv bleibt. Die zum Fixieren des Sicherungselementes auf dem Sicherungselementeträgerband dienende Klebstoffschicht kann somit auch nach dem Spendvorgang zu seiner Befestigung dienen.

Es bestehen bezüglich des Laminierens verschiedene Möglichkeiten. In einer vorteilhaften Ausführungsform werden die Sicherungselemente auf eine mit einer selbstklebenden Beschichtung versehene Fläche der Deckschicht aufgebracht; die Fixierung der Sicherungselemente erfolgt somit durch die auf der Deckschicht bereits vorhandene Klebstoffschicht. Um ein Sicherheitsetikett auf einer möglichst großen Fläche mit einem Gegenstand verkleben zu können, wird in diesem Fall die adhäsive Beschichtung der Sicherungselemente - die zu ihrer Anbringung auf dem Sicherungselementeträgerband dient - derart positioniert, daß sie der selbstklebenden Beschichtung der Deckschicht gegenüberliegt.

Im speziellen findet dabei eine Deckschicht Verwendung, deren selbstklebende Fläche auf einem beliebigen Trägerband befestigt ist, das im folgenden als Deckschicht-Trägerband bezeichnet wird. Letzteres wird von der Deckschicht abgezogen, so daß die selbstklebende Fläche freiliegt, und die Sicherungselemente werden darauf gespendet. Anschließend wird die nunmehr mit Sicherungselementen ausgestattete Deckschicht auf das Trägerband aufgebracht. Die Deckschicht und das Trägerband nehmen die Sicherungselemente nach Art eines Sandwichs zwischen sich auf.

Alternativ zur Spendung der Sicherungselemente auf die Deckschicht können sie auf das Trägerband aufgeklebt werden, auf das anschließend die Deckschicht aufgebracht wird. Die Befestigung der Sicherungselemente an dem Trägerband erfolgt vorzugsweise mit derselben adhäsiven Beschichtung, mit der das Sicherungselement vor dem Spendvorgang am Sicherungselementeträgerband befestigt war. Im Regelfall ist auch die mit dem Trägerband in Kontakt tretende Fläche der Deckschicht mit einer selbstklebenden Beschichtung versehen.

Dabei bietet es sich an, eine Deckschicht zu verwenden, die mit einer selbstklebenden Fläche auf einem Deckschicht-Trägerband befestigt ist. Letzteres wird von der Deckschicht abgezogen, bevor diese auf das Trägerband mit den Sicherungselementen aufgeklebt wird.

Weiterhin ist es möglich, die Deckschicht in bereits ausgestanzter Form mit den Sicherungselementen zusammenzuführen. Auch die Alternative, die Deckschicht erst nach dem Zusammenlaminieren mit den Sicherungselementen in ihre endgültige Etiketten- und Anhängerform auszustanzen, ist denkbar.

Als Material der Deckschicht kommen primär Papier, Pappe und Kunststoff in Frage. Besteht die Deckschicht aus bedruckbarem Etikettenpapier und das Trägerband aus mit Silikon beschichtetem Papier, sind Sicherheitsetiketten herstellbar, die in herkömmlichen Handetikettiergeräten verwendet werden können. Aus Pappe oder Kunststoff können insbesondere strapazierfähige Sicherheitsanhänger hergestellt werden, wie sie beispielsweise zum Etikettieren von Textilien Verwendung finden.

Im folgenden werden Ausführungsformen der Erfindung anhand der Zeichnung näher erläutert. Sie zeigen in schematischer Darstellung in
Figur 1: die Herstellung von Trägerbandstreifen mit regelmäßig angeordneten Sicherungselementen,
Figur 2: die Herstellung von Trägerbandstreifen mit zufällig angeordneten Sicherungselementen,
Figur 3: die Herstellung von Trägerbandstreifen mit Attrappen von Sicherungselementen,
Figur 4: die Herstellung von Trägerbandstreifen mit unterschiedlich positionierten Sicherungselementen mit mehreren Spendköpfen,
Figur 5: die Herstellung von Trägerbandstreifen mit unterschiedlich positionierten Sicherungselementen mit einem Spendkopf,
Figur 6: die Herstellung von Trägerbandstreifen unter Verwendung gestanzter Etiketten.
Figur 7: die Herstellung von Trägerbandstreifen unter Verwendung nicht gestanzter Etiketten,
Figur 8: die Herstellung von Trägerbandstreifen, wobei die Sicherungselemente auf ein Trägerband gespendet werden.

In Figur wird ein auf drehbaren Rollen (5) gelagertes Trägerband (1) von links nach rechts transportiert. Ein Spendkopf (4) bringt elektromagnetische Sicherungselemente (2) beliebiger Art auf das Trägerband (1) auf, wobei anhand der - jeweils vier Etiketten (3) entsprechenden - Abschnitte (6, 6') erkennbar ist, daß sich die Reihenfolge der Sicherungselemente (2) nach dem Transportweg des Trägerbandes (1) für vier Etiketten (3) durch eine entsprechende Steuerung des Antriebs des Spendkopfes (4) wiederholt: jeweils das zweite Etikett (3) wird nicht mit einem Sicherungselement (2) versehen. Im rechts eingezeichneten Abschnitt (6') sind die auf dem Trägerband (1) positionierten Sicherungselemente (2) mittels eines nicht eingezeichneten, zweiten Spendkopfes bereits mit Etiketten (3) versehen.

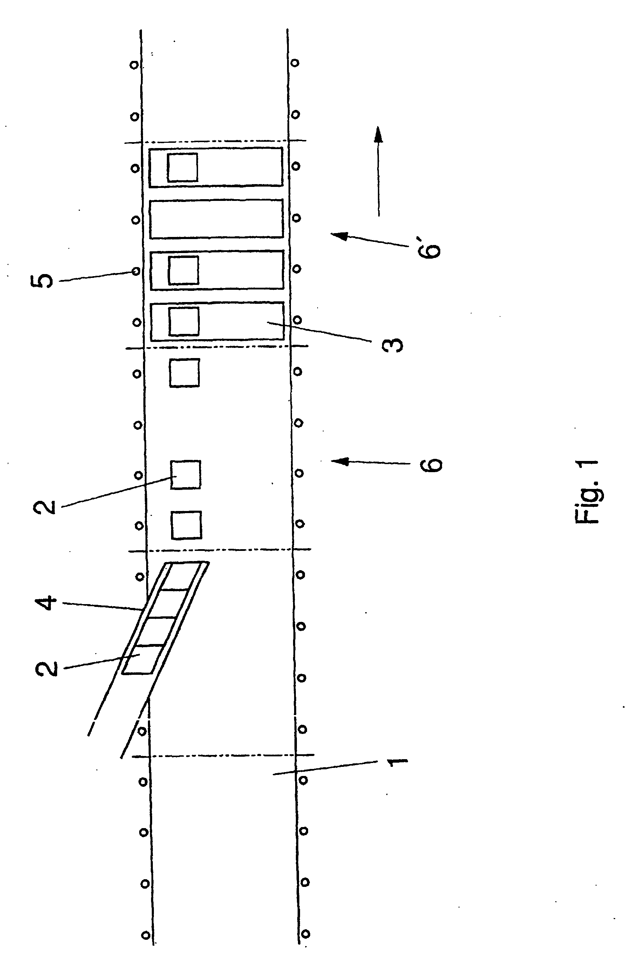

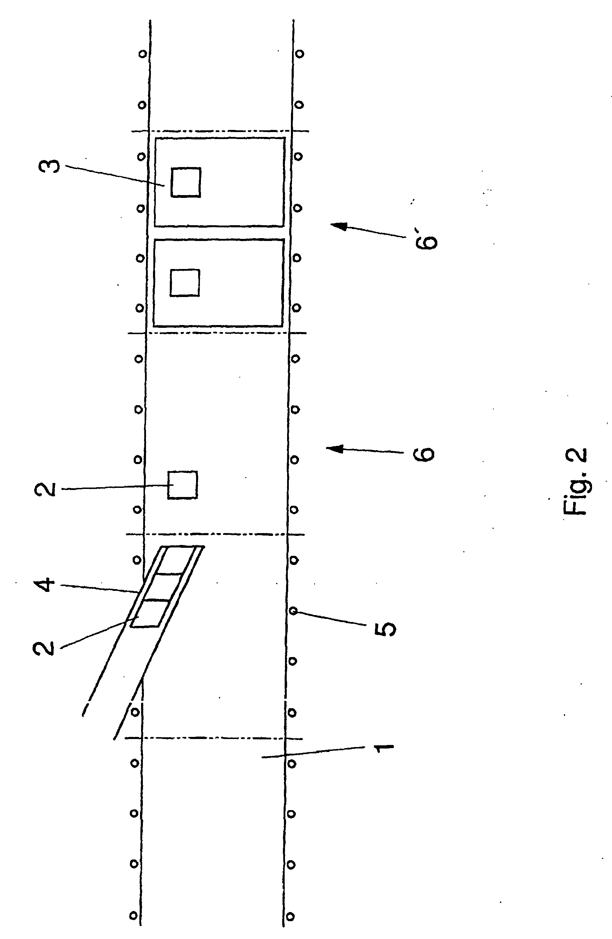

In Figur 2 ist im Unterschied zur Figur 1 keine festgelegte Reihenfolge der Sicherungselemente (2) erkennbar; während im ersten, links eingezeichneten Abschnitt (6) nur ein Etikett (3) gesichert wird, sind die beiden im rechten Abschnitt (6') dargestellten Etiketten (3) mit Sicherungselementen (2) ausgestattet.

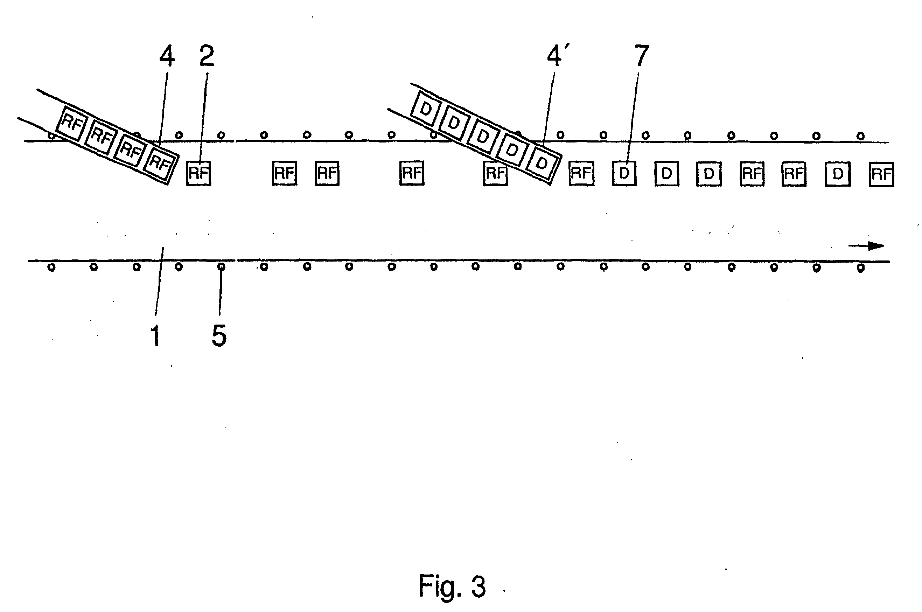

Figur 3 stellt die Herstellung eines Trägerbandstreifens dar, dessen Etiketten zum Teil mit Sicherungselementen (2) und zum Teil mit Attrappen (7) versehen sind. Während die Sicherungselemente mittels des links eingezeichneten Spendkopfes (4) auf das Trägerband (1) aufgetragen werden, dient ein zweiter Spendkopf (4') zum Aufbringen der in Form und Farbgebung mit den Sicherungselementen übereinstimmenden Attrappen (7).

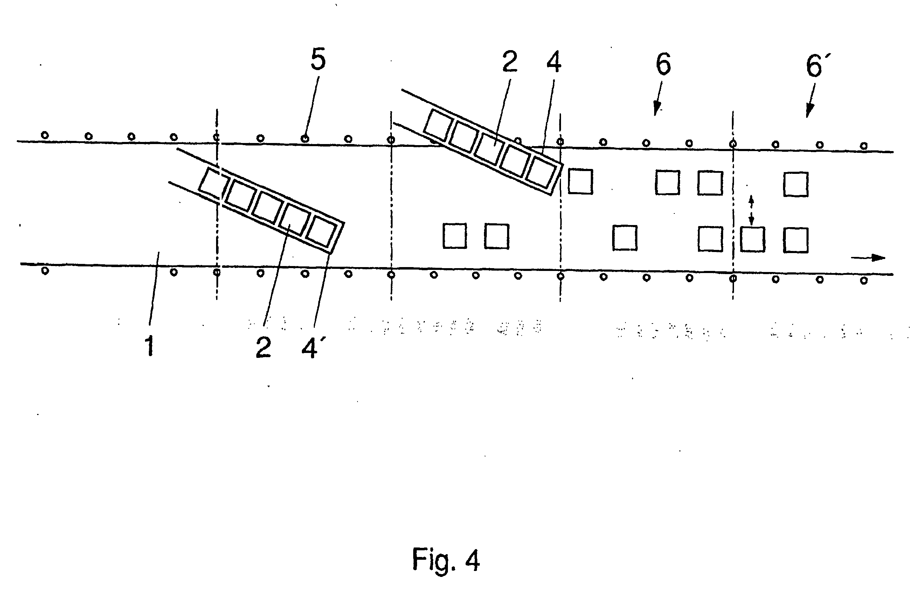

In Figur 4 wird das Trägerband (1) aus zwei unterschiedlichen, seitlich (d. h. in der Ebene der Etiketten (3), orthogonal zur Transportrichtung) und in der Vorschubrichtung des Trägerbandes (1) versetzten Spendköpfen (4, 4') mit Sicherungselementen (2) versehen. Anhand der Abschnitte (6, 6') ist erkennbar, daß einige Positionen frei bleiben, so daß im Ergebnis nicht alle Etiketten (3) mit Sicherungselementen (2) versehen werden. Außerdem variiert die Reihenfolge der Sicherungselemente (2) nach dem Zufallsprinzip. Die dargestellte Vorrichtung kann einerseits dazu dienen, Sicherungselemente (2) für seitlich nebeneinander angeordnete Etiketten (3) auf das Trägerband (1) aufzubringen, andererseits sich über die gesamte Breite des Trägerbandes (1) erstreckende Etiketten (3) mit Sicherungselementen (2) variierender Positionen zu versehen. In beiden Fällen können einzelne Etiketten (3) frei von Sicherungselementen (2) bleiben. Es besteht auch die Möglichkeit, die Spendköpfe (4, 4') zur Variation der Lage der Sicherungselemente (2) in seitlicher Richtung zu verschwenken. Schließlich kann die Position der Sicherungselemente (2) in der Bewegungsrichtung des Trägerbandes (1) durch eine geeignete Steuerung des Zeitpunktes des Aufbringens variiert werden.

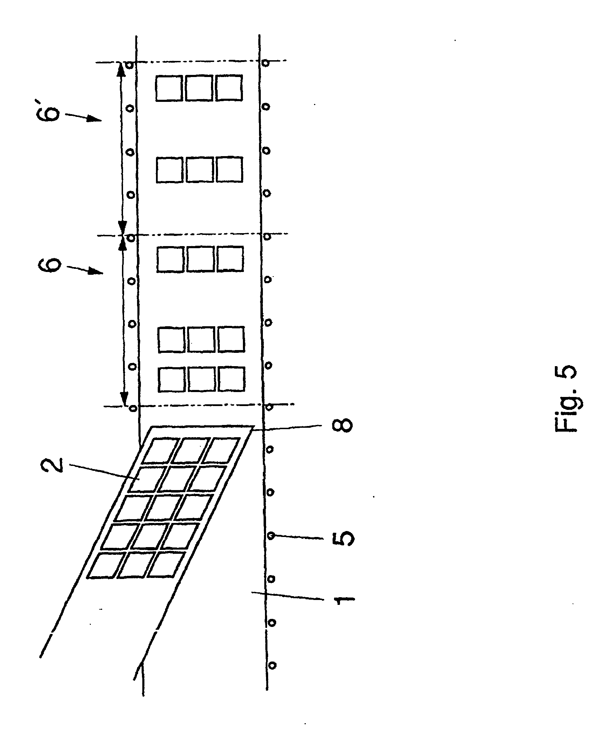

Im Unterschied zu Figur 4 wird das Trägerband (1) in Figur 5 mittels eines einzigen Spendkopfes (8) mit Sicherungselementen (2) ausgestattet. Der Spendkopf (8) weist jedoch drei seitlich nebeneinander angeordnete Spendkanäle auf und ist somit geeignet, drei nebeneinander angeordnete Etiketten (3) mit Sicherungselementen (2) zu versehen, wobei jeweils nur ein Teil der nebeneinander angeordneten Etiketten (3) Sicherungselemente erhalten kann, falls die Spendkanäle getrennt voneinander aktivierbar sind. Alternativ kann ein Etikett (3) an drei unterschiedlichen Positionen mit einem Sicherungselement (2) ausgestattet werden.

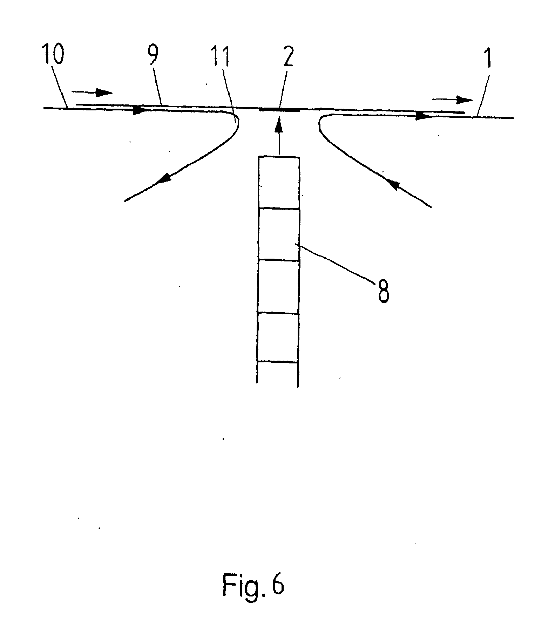

In Figur 6 findet ein Spendkopf (8) Verwendung, um auf einem Sicherungselementeträgerband aufgeklebte Sicherungselemente (2) von letzterem zu trennen und auf eine bereits in die endgültige Form eines Etiketts (3) ausgestanzte Deckschicht (9) zu spenden. Die Deckschicht (9) ist anfangs auf einem Deckschicht-Trägerband (10) aufgeklebt und wird an einer Spendkante (11) davon gelöst. In der Regel ist die Geschwindigkeit, mit der die Deckschicht (9) am Spendkopf (8) vorbeigeführt wird, konstant? Auf die freiliegende Deckschicht (9) werden nunmehr sukzessive die Sicherungselemente (2) mittels des Spendkopfes (8) aufgebracht. Das Sicherungselementeträgerband mit den Sicherungselementen (2) wird nicht kontinuierlich, sondern schrittweise bewegt. Bei jedem Schritt wird ein Sicherungselement (2) in an sich bekannter Weise an einer (nicht eingezeichneten) Spendkante von seinem Sicherungselementeträgerband getrennt und geht eine adhäsive Bindung mit der Deckschicht (9) ein. Das nunmehr fertige Sicherheitsetikett wird schließlich auf das Trägerband (1) aufgebracht. Es ist offensichtlich, daß die Position des Sicherungselementes (2) auf dem fertigen Sicherheitsetikett durch den Zeitpunkt festgelegt wird, an dem das Sicherungselement (2) von seinem Sicherungselementeträgerband getrennt wird und somit beliebig steuerbar ist.

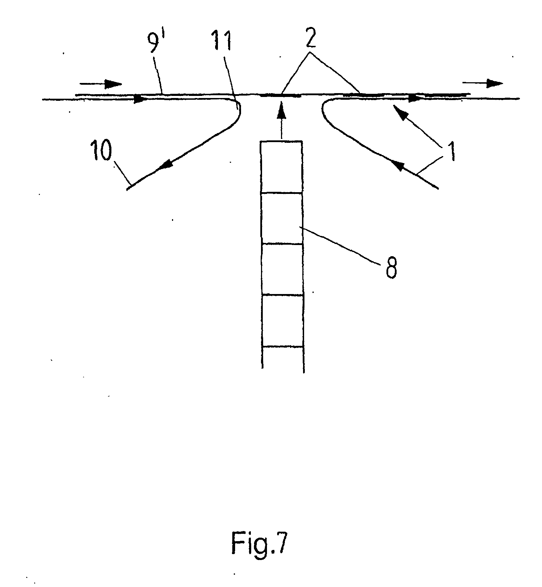

In Figur 7 wird eine Deckschicht (9') mit größerer Länge als in Figur 6 verarbeitet. Diese Deckschicht (9') ist beispielsweise ein Laminat, das anschließend noch in die endgültige Form zu stanzen ist; daher wird es mit mehreren Sicherungselementen (2) versehen.

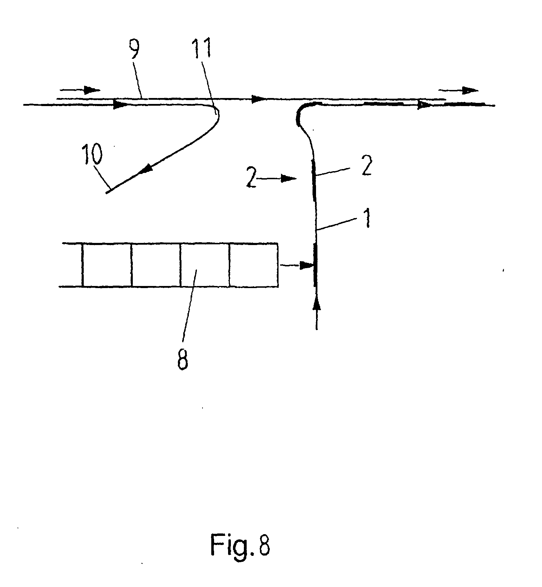

In Figur 8 wird die Deckschicht (9), die sowohl ein gestanztes als auch ein noch nicht gestanztes Laminat sein kann, mit etwa konstanter Geschwindigkeit bewegt und an der Spendkante (11) vom Deckschicht-Trägerband (10) getrennt und auf das Trägerband (1) aufgebracht. Die Sicherungselemente (2) werden im Unterschied zu den vorhergehenden Figuren 6 und 7 jedoch mittels des Spendkopfes (8) auf das Trägerband (1) aufgebracht, das sich mit derselben Geschwindigkeit wie die Deckschicht (9) bewegt. Erst im Anschluß daran wird die Deckschicht (9) darauf laminiert. Anzumerken bleibt, daß die Trägerbänder (1, 10) - ohne die bzw. mit der Deckschicht (9) - von Rollen abgewickelt und auf andere Rollen aufgewickelt werden.

Es ist offensichtlich, daß die Erfindung ermöglicht, die Sicherungselemente an beliebiger Stelle der Etiketten oder Anhänger anzubringen. Ein weiterer Vorzug besteht darin, daß das erfindungsgemäße Verfahren bei beliebigen Arten von Etiketten und Anhängern zur Verwendung kommen kann. Im Ergebnis erhältman also einen Sicherheitsetikettenstreifen, der sich durch Preiswürdigkeit und hohe Diebstahlsicherheit auszeichnet.

## Patentansprüche

1. Verfahren zur Herstellung eines Sicherheitsetikettenstreifens, bei dem eine Deckschicht (9) und elektromagnetisch aktive bzw. aktivierbare Sicherungselemente (2) zusammengefügt werden,
**dadurch gekennzeichnet,**
**daß** die Sicherungselemente (2) einzeln auf ein Sicherungselementeträgerband aufgeklebt werden und daß die Sicherungselemente (2) sukzessive an einer Spendkante vom Sicherungselementeträgerband getrennt und mit der Deckschicht (9) und einem Trägerband (1), die die Sicherungselemente (2) nach Art eines Sandwichs zwischen sich aufnehmen, zusammenlaminiert werden.

2. Verfahren nach Anspruch 1,
**dadurch gekennzeichnet,**
**daß** die Sicherungselemente (2) derart auf das Sicherungselementeträgerband aufgeklebt werden, daß sie nach dem Ablösen davon adhäsiv bleiben.

3. Verfahren nach Anspruch 1 oder 2,
**dadurch gekennzeichnet,**
**daß** die Sicherungselemente (2) auf eine mit einer selbstklebenden Beschichtung versehene Fläche der Deckschicht (9) aufgebracht werden.

4. Verfahren nach Anspruch 3,
**dadurch gekennzeichnet,**
**daß** die Deckschicht (9) mit der selbstklebenden Fläche auf einem Deckschicht-Trägerband (10) befestigt wird, daß das Deckschicht-Trägerband (10) von der Deckschicht (9) abgezogen wird,
**daß** die Sicherungselemente (2) auf die selbstklebende Fläche der Deckschicht (9) aufgebracht werden und
**daß** die Deckschicht (9) mit den Sicherungselementen (2) auf das Trägerband (1) aufgebracht und mit diesem zusammenlaminiert wird.

5. Verfahren nach Anspruch 1 oder 2,
**dadurch gekennzeichnet,**
**daß** die Sicherungselemente (2) auf das Trägerband (1) aufgeklebt werden und daß die Deckschicht (9) auf das Trägerband (1) mit den Sicherungselementen (2) aufgebracht wird.

6. Verfahren nach Anspruch 5,
**dadurch gekennzeichnet,**
**daß** die Deckschicht (9) mit einer selbstklebenden Fläche auf einem Deckschicht-Trägerband (10) befestigt wird und daß das Deckschicht-Trägerband (10) von der Deckschicht (9) abgezogen wird, bevor die Deckschicht (9) auf das Trägerband (1) mit den Sicherungselementen (1) aufgeklebt wird.

## Claims

1. A method of manufacturing a security label strip in which an overlayer (9) and electromagnetically active or activatable security elements (2) are joined together,
**characterized by** the steps of
individually adhesive-bonding the security elements (2) to a security element carrier web, and
successively detaching the security elements (2) from the security element carrier web at a dispensing edge and laminating them together with the overlayer (9) and a carrier web (1), which receive the security elements (2) between them in the manner of a sandwich.

2. The method as claimed in claim 1,
**characterized by** the step of adhesive-bonding the security elements (2) to the security element carrier web in such manner that they remain adhesive upon detachment therefrom.

3. The method as claimed in claim 1 or 2,
**characterized by** the step of applying the security elements (2) to an area of the overlayer (9) provided with a self-adhesive coating.

4. The method as claimed in claim 3,
**characterized by** the steps of
affixing the overlayer (9) with the self-adhesive area to an overlayer carrier web (10), detaching the overlayer carrier web (10) from the overlayer (9),
applying the security elements (2) to the self-adhesive area of the overlayer (9), and
applying the overlayer (9) with the security elements (2) to the carrier web (1) and laminating the two together.

5. The method as claimed in claim 1 or 2,
**characterized by** the steps of adhesive-bonding the security elements (2) to the carrier web (1) and applying the overlayer (9) to the carrier web (1) carrying the security elements (2).

6. The method as claimed in claim 5,
**characterized by** the step of affixing the overlayer (9) with a self-adhesive area thereof to an overlayer carrier web (10) and detaching the overlayer carrier web (10) from the overlayer (9) before the overlayer (9) is adhesive-bonded to the carrier web (1) carrying the security elements (1).

## Revendications

1. Procédé pour la fabrication d'une bande de protection d'étiquettes, à laquelle est assemblé un film de protection (9) et des éléments préservés (2) actifs ou activables électromagnétiquement, **caractérisé en ce que** les éléments préservés (2) sont collés individuellement sur une bande support d'éléments préservés et **en ce que** les éléments préservés (2) sont séparés successivement de la bande support des éléments préservés sur une arête de distribution et conjointement stratifiés avec le film de protection (9) et une bande support (1) qui logent entre celles-ci les éléments préservés (2) en sandwich.

2. Procédé selon la revendication 1, **caractérisé en ce que** les éléments préservés (2) sont collés sur la bande support d'éléments préservés de manière à ce qu'ils restent adhésifs après avoir été détachés.

3. Procédé selon la revendication 1 ou 2, **caractérisé en ce que** les éléments préservés (2) sont appliqués sur une surface du film de protection (9) enduite d'un revêtement autocollant.

4. Procédé selon la revendication 3, **caractérisé en ce que** le film de protection (9) est fixé avec la surface autocollante sur une bande support du film de protection (10), **en ce que** la bande support du film de protection (10) est retirée du film de protection (9), **en ce que** les éléments préservés (2) sont appliqués sur la surface autocollante du film de protection (9) et **en ce que** le film de protection (9) est appliqué avec les éléments préservés (2) sur la couche support (1) et feuilletée avec celle-ci.

5. Procédé selon la revendication 1 ou 2, **caractérisé en ce que** les éléments préservés (2) sont collés sur la bande support (1) et **en ce que** le film de protection (9) est appliqué sur la bande support (1) avec les éléments présérves (2).

6. Procédé selon la revendication 5, **caractérisé en ce que** le film de protection (9) est fixé avec une surface autocollante sur une bande support du film de protection (10) et **en ce que** la bande support du film de protection (10) est retirée du film de protection (9) avant que le film de protection (9) ne soit collé sur la bande support (1) avec les éléments préservés (1).
